# EUROPÄISCHE PATENTSCHRIFT

(11) **EP 3 429 759 B1**
(45) Veröffentlichungstag und Bekanntmachung des Hinweises auf die Patenterteilung: **10.06.2020**
(21) Anmeldenummer: 16825326.8
(22) Anmeldetag: 23.12.2016
(51) Int. Cl.: B05B 12/24, B05B 15/50, B25J 11/00, B25J 19/00

(54) **ROBOTERSCHUTZHÜLLE MIT EINER KEDERVERBINDUNG**
ROBOT PROTECTING JACKET COMPRISING A BEADED CONNECTION
HOUSSE PROTECTRICE DE ROBOT POURVUE D'UNE LIAISON À JONC

(30) Priorität: 14.03.2016 DE 102016003080
(43) Veröffentlichungstag der Anmeldung: 23.01.2019
(73) Patentinhaber: Dürr Systems AG, 74321 Bietigheim-Bissingen (DE)
(72) Erfinder: HANNIG, Detlev, 73650 Winterbach (DE)
(74) Vertreter: v. Bezold & Partner Patentanwälte - PartG mbB
(86) Internationale Anmeldenummer: PCT/EP2016/002183
(87) Internationale Veröffentlichungsnummer: WO 2017/157405

(56) Entgegenhaltungen:
- WO-A1-2008/119011
- DE-C1- 19 731 260
- FR-A1- 2 703 941
- JP-A- S6 365 973
- JP-A- 2008 030 186
- US-A- 4 904 514
- US-A1- 2003 080 545
- US-A1- 2004 187 989
- US-A1- 2004 258 877
- US-A1- 2006 165 953
- US-A1- 2012 055 595

## Beschreibung

Die Erfindung betrifft eine Roboterschutzhülle für einen Beschichtungsroboter (z. B. Lackierroboter) gemäß dem Oberbegriff des Anspruchs 1.

In modernen Lackieranlagen zur Lackierung von Kraftfahrzeugkarosseriebauteilen werden üblicherweise mehrachsige Lackierroboter mit einer seriellen Kinematik eingesetzt, um die als Applikationsgerät eingesetzten Rotationszerstäuber hochbeweglich über die zu lackierenden Bauteiloberflächen zu führen. Im Lackierbetrieb besteht die Gefahr einer Verschmutzung derartiger Lackierroboter durch überschüssigen Beschichtungsmittelnebel ("Overspray"), was insbesondere bei einem Farbwechsel zu einer Verschmutzung der zu lackierenden Kraftfahrzeugkarosseriebauteile führen kann, da im Extremfall Lackreste der alten Farbe von dem Lackierroboter auf die Bauteiloberfläche der mit der neuen Farbe zu lackierenden Kraftfahrzeugkarosseriebauteile tropfen können.

Es ist deshalb aus dem Stand der Technik bekannt, sogenannte Roboterschutzanzüge oder Roboterschutzhüllen zu verwenden, die aus einem Wegwerfmaterial bestehen und den Lackierroboter ummanteln. In Betriebspausen kann dann ein verschmutzter Roboterschutzanzug durch den sauberen Roboterschutzanzug ersetzt werden.

Zur Befestigung eines derartigen Roboterschutzanzugs an einem Lackierroboter sind aus dem Stand der Technik verschiedene Befestigungsmethoden bekannt, wie beispielsweise Klettband, Druckknöpfe, Klebeband oder Gummizüge. Diese bekannten Befestigungsmethoden haben jedoch jeweils spezifische Nachteile. So verliert ein Klettband bei einer Verschmutzung durch Vaseline oder Lack seine Haftungseigenschaft und ermöglicht deshalb in einer Lackieranlage nur eine unsichere Verbindung. Druckknöpfe bilden dagegen nur eine punktuelle Verbindung und können somit keine umlaufende Verbindung herstellen. Die Befestigung mittels Klebeband muss dagegen manuell erfolgen und ist nicht prozesssicher. Darüber hinaus muss Klebeband bei einer Entfernung des Roboterschutzanzugs wieder aufgeschnitten werden, wodurch darunterliegende Bauteile des Lackierroboters beschädigt werden können. Schließlich können Gummiringe nur verwendet werden, wenn eine komplett ringförmig umlaufende Struktur des Roboterschutzanzugs vorhanden ist, was jedoch oftmals nicht der Fall ist. Darüber hinaus ermöglichen derartige Gummiringe keine exakte Positionierung.

Zum allgemeinen technischen Hintergrund der Erfindung ist auch hinzuweisen auf US 2004/187989 A1, US 2006/165953 A1, US 2004/258877 A1, WO 2008/119011 A1, DE 197 31 260 C1, US 4 904 514 A, FR 2 703 941 A1, JP S63 65973 A, US 2012/055595 A1, JP 2008 030186 A und US 2003/080545 A1.

Der Erfindung liegt deshalb die Aufgabe zugrunde, die Befestigung einer Roboterschutzhülle an einem Beschichtungsroboter (z. B. Lackierroboter) zu verbessern.

Diese Aufgabe wird durch eine erfindungsgemäße Roboterschutzhülle gemäß dem Hauptanspruch gelöst.

Die Erfindung umfasst die allgemeine technische Lehre, zur Befestigung einer Roboterschutzhülle (z. B. Roboterschutzanzug) an einem Beschichtungsroboter (z. B. Lackierroboter) eine Kederverbindung einzusetzen. Derartige Kederverbindungen sind außerhalb des technischen Gebiets der Lackiertechnik beispielsweise von Caravans, Segelbooten, aus dem Zeltbau oder von Polstermöbeln bekannt und müssen deshalb nicht eingehend beschrieben werden. An dieser Stelle ist lediglich zu erwähnen, dass eine Kederverbindung aus einer Kederschiene und einem Keder besteht, wobei die Kederschiene an dem einen Bauteil angebracht ist, während der Keder an dem anderen Bauteil angebracht ist. Zur Herstellung einer formschlüssigen Verbindung wird dann das Bauteil mit dem Keder in die Kederschiene hinein gepresst oder in Längsrichtung eingeschoben bis eine formschlüssige Verbindung hergestellt wird.

Die erfindungsgemäße Roboterschutzhülle weist deshalb in Übereinstimmung mit dem Stand der Technik ein Verbindungselement zur formschlüssigen Befestigung der Roboterschutzhülle auf. Die erfindungsgemäße Roboterschutzhülle zeichnet sich nun dadurch aus, dass dieses Verbindungselement Bestandteil einer Kederverbindung ist.

In einer Variante der Erfindung dient die Kederverbindung zur Verbindung zwischen der Roboterschutzhülle einerseits und dem Beschichtungsroboter andererseits. Der Keder kann hierbei wahlweise an der Roboterschutzhülle oder an dem Beschichtungsroboter angebracht sein, während die zugehörige Kederschiene an dem jeweils anderen Bauteil (Roboterschutzhülle bzw. Beschichtungsroboter) angebracht ist.

In einer anderen Variante der Erfindung dient die Kederverbindung dagegen zur Verbindung von zwei Teilen der Roboterschutzhülle. An dem einen Teil der Roboterschutzhülle befindet sich dann der Keder, während sich an dem anderen Teil der Roboterschutzhülle die zugehörige Kederschiene befindet.

In einem bevorzugten Ausführungsbeispiel der Erfindung weist die Roboterschutzhülle mindestens zwei Teile auf, die im montierten Zustand aneinander angrenzen. An der Übergangsstelle zwischen den beiden Teilen der Roboterschutzhülle sind die beiden Teile dann vorzugsweise durch eine Kederverbindung mit dem Beschichtungsroboter verbunden. Beispielsweise kann dieser Übergang zwischen den benachbarten Teilen der Roboterschutzhülle im montierten Zustand am Übergang zwischen einer Roboterbasis und einem drehbaren Roboterglied liegen. Das eine Teil der Roboterschutzhülle ist dann vorzugsweise mit einer Kederverbindung mit der Roboterbasis verbunden, während das andere Teil der Roboterschutzhülle vorzugsweise mittels einer Kederverbindung mit dem drehbaren Roboterglied verbunden ist.

Vorzugsweise sind die Kederverbindungen der beiden benachbarten Teile der Roboterschutzhülle langgestreckt und verlaufen parallel zueinander, wobei die Kederverbindungen ein Roboterglied (z. B. Roboterbasis, drehbares Roboterglied) ringförmig umschließen können.

Bei dem vor einer Verschmutzung zu schützenden Beschichtungsroboter (z. B. Lackierroboter) handelt es sich in der Regel um einen mehrachsigen Roboter mit einer seriellen Kinematik. Der Roboter weist vorzugsweise eine Roboterbasis auf, die wahlweise ortsfest angeordnet ist oder entlang einer Verfahrschiene verfahrbar sein kann. Die Roboterbasis trägt vorzugsweise ein drehbares Roboterglied, das vorzugsweise um eine senkrechte Drehachse drehbar ist, wobei dieses drehbare Roboterglied vorzugsweise an der Oberseite der Roboterbasis angeordnet ist. Weiterhin umfasst der Beschichtungsroboter vorzugsweise einen proximalen Roboterarm, der relativ zu dem drehbaren Roboterglied schwenkbar ist, insbesondere um eine waagerechte Schwenkachse. Darüber hinaus weist der zu schützende Beschichtungsroboter vorzugsweise einen distalen Roboterarm, der relativ zu dem proximalen Roboterarm schwenkbar ist, insbesondere um eine waagerechte Schwenkachse. Weiterhin umfasst der zu schützende Beschichtungsroboter vorzugsweise eine herkömmliche Roboterhandachse mit beispielsweise drei Achsen, die ein Applikationsgerät (z. B. Rotationszerstäuber) trägt.

Die erfindungsgemäße Roboterschutzhülle weist dann vorzugsweise mehrere Teile auf, die mittels einer Kederverbindung miteinander bzw. mit dem Beschichtungsroboter verbunden werden können. So ist ein erstes Teil der Roboterschutzhülle vorzugsweise an die Form der Roboterbasis angepasst und ummantelt die Roboterbasis im montierten Zustand. Ein zweites Teil der Roboterschutzhülle ist dagegen vorzugsweise an die Außenform des drehbaren Roboterglieds und des proximalen Roboterarms angepasst und ummantelt im montierten Zustand das drehbare Roboterglied und den proximalen Roboterarm. Schließlich ist ein drittes Teil der Roboterschutzhülle vorzugsweise an die Form des distalen Roboterarms angepasst und ummantelt dann im montierten Zustand den distalen Roboterarm. Diese mehrteilige Gestaltung der erfindungsgemäßen Roboterschutzhülle ist auch vorteilhaft, weil die einzelnen Teile der Roboterschutzhülle dann in Abhängigkeit von ihrem Verschmutzungsgrad einzeln ausgetauscht werden können.

In dem bevorzugten Ausführungsbeispiel der Erfindung ist die Roboterschutzhülle lackundurchlässig, um zu verhindern, dass Lackreste ("Overspray") die Roboterschutzhülle durchdringt und den Beschichtungsroboter verschmutzt.

Weiterhin ist zu erwähnen, dass die Roboterschutzhülle vorzugsweise aus einem mindestens teilweise flexiblen Material besteht und eine flexible Form hat, damit sich die Roboterschutzhülle an die Außenform verschiedener Beschichtungsroboter anpassen kann.

Darüber hinaus ist zu bemerken, dass die Roboterschutzhülle vorzugsweise, je nach Anwendung, aus einem elektrisch leitenden oder isolierenden Material besteht. Dies ist vorteilhaft, weil die Lackapplikation in modernen Lackieranlagen üblicherweise mit einer elektrostatischen Beschichtungsmittelaufladung erfolgt.

Ein Vorteil der erfindungsgemäßen Kederverbindung ist auch die Tatsache, dass die Kederverbindung manuell und ohne Werkzeug lösbar und verschließbar ist, so dass die Roboterschutzhülle schnell und einfach ausgewechselt werden kann.

Die Herstellung der Kederverbindung kann wie bei herkömmlichen Kederverbindungen erfolgen, indem der Keder in Längsrichtung in die Kederschiene hinein geschoben wird. Zum Lösen der Kederverbindung wird der Keder dann wieder in Längsrichtung aus der Kederschiene heraus gezogen.

Es ist jedoch alternativ auch möglich, dass die Herstellung der Kederverbindung erfolgt, indem der Keder quer zur Längsrichtung der Kederschiene in die Kederschiene hinein gepresst wird, wodurch eine Rastverbindung entsteht. Die Kederverbindung wieder dann wieder gelöst, indem der Keder quer zur Längsrichtung der Kederschiene und entgegen der Rastkraft der Kederverbindung aus der Kederschiene herausgezogen wird.

Weiterhin ist zu erwähnen, dass die Roboterschutzhülle mehrere Teile aufweisen kann, die jeweils paarweise durch die Kederverbindung miteinander verbunden werden können.

Darüber hinaus umfasst die Erfindung auch einen weiteren Erfindungsaspekt. So sieht dieser weitere Erfindungsaspekt vor, dass die Roboterschutzhülle einen Zugriff auf einen Wartungsbereich an dem eingehüllten Beschichtungsroboter ermöglicht. So kann sich an dem Beschichtungsroboter eine Wartungsklappe befinden, die zu Wartungszwecken abgenommen wird, damit dann in dem Gehäuseinneren Wartungsarbeiten durchgeführt werden können. Die Roboterschutzhülle weist dann in dem Wartungsbereich eine verschließbare Öffnung auf, die während der Wartung geöffnet und anschließend wieder verschlossen wird.

Diese Öffnung in der Roboterschutzhülle kann beispielsweise durch eine Kederverbindung, einen Reißverschluss, einen oder mehrere Druckknöpfe oder durch einen Klettverschluss verschlossen werden.

Die Erfindung beansprucht nicht nur Schutz für die vorstehend beschriebene erfindungsgemäße Roboterschutzhülle als Austauschteil. Vielmehr beansprucht die Erfindung auch Schutz für einen Beschichtungsroboter (z. B. Lackierroboter) oder eine Handhabungsroboter (z. B. Haubenöffner, Türöffner) mit einer solchen Roboterschutzhülle.

Es wurde bereits vorstehend erwähnt, dass die Roboterschutzhülle vorzugsweise mehrteilig und insbesondere dreiteilig ist, wobei ein erstes Teil die Roboterbasis ummantelt, während ein zweites Teil der Roboterschutzhülle das drehbare Roboterglied und den proximalen Roboterarm ummantelt, wohingegen ein drittes Teil der Roboterschutzhülle den distalen Roboterarm ummantelt.

Die Kederverbindung kann hierbei beispielsweise eingesetzt werden, um jeweils paarweise benachbarte Teile der Roboterschutzhülle miteinander zu verbinden. Alternativ besteht jedoch die Möglichkeit, dass die Kederverbindung auch dazu eingesetzt wird, ein Teil der Roboterschutzhülle mit dem Beschichtungsroboter zu verbinden.

In beiden Fällen kann die Kederverbindung ringförmig sein und ein Roboterglied (z. B. Roboterbasis, drehbares Roboterglied, proximaler Roboterarm, distaler Roboterarm) ringförmig umschließen.

Schließlich ist noch zu erwähnen, dass die Erfindung auch Schutz beansprucht für die neuartige Verwendung einer Kederverbindung zur formschlüssigen Verbindung einer Roboterschutzhülle mit einem anderen Bauteil insbesondere mit dem Beschichtungsroboter oder mit einer benachbarten Roboterschutzhülle.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine schematische Darstellung eines erfindungs-gemäßen Lackierroboters mit einer erfindungsge-mäßen Roboterschutzhülle,
- Figur 2A: eine erfindungsgemäße Kederverbindung im einge-rasteten Zustand,
- Figur 2B: eine erfindungsgemäße Kederverbindung im gelösten Zustand, sowie
- Figur 3A, 3B: verschiedene Ansichten eines Lackierroboters mit einer Roboterschutzhülle, die im Bereich einer Wartungsklappe an dem Lackierroboter geöffnet werden kann.

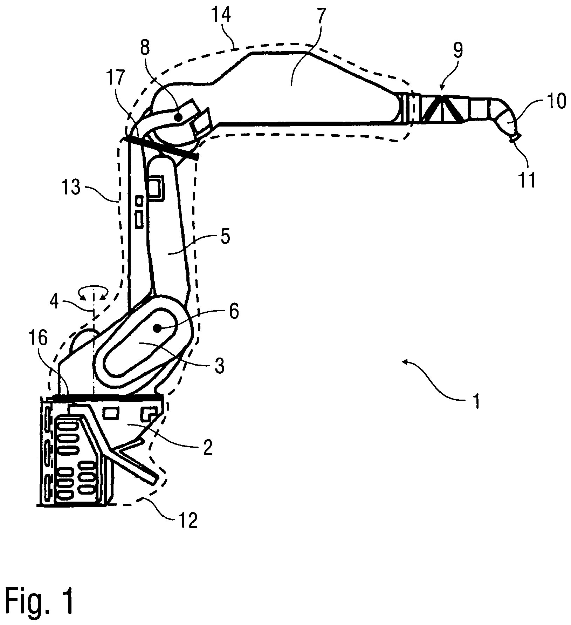

Figur 1 zeigt einen herkömmlichen Lackierroboter 1, der beispielsweise in einer Lackieranlage eingesetzt werden kann, um Kraftfahrzeugkarosseriebauteile zu lackieren.

In Übereinstimmung mit dem Stand der Technik weist der Lackierroboter 1 zunächst eine Roboterbasis 2 auf, die wahlweise ortsfest montiert ist oder entlang einer Verfahrschiene rechtwinklig zur Zeichenebene verfahrbar ist.

Die Roboterbasis 2 trägt an ihrer Oberseite ein drehbares Roboterglied 3, das relativ zu der Roboterbasis 2 um eine senkrechte Drehachse 4 drehbar ist.

Das drehbare Roboterglied 3 trägt wiederum einen proximalen Roboterarm 5, der relativ zu dem drehbaren Roboterglied 3 um eine waagerechte Schwenkachse 6 schwenkbar ist.

Am distalen Ende des proximalen Roboterarms 5 ist ein distaler Roboterarm 7 schwenkbar angebracht, wobei der distale Roboterarm 7 relativ zu dem proximalen Roboterarm 5 um eine waagerechte Schwenkachse 8 schwenkbar ist.

Der distale Roboterarm 7 trägt an seinem Ende eine mehrachsige, herkömmlich ausgebildete Roboterhandachse 9, die als Applikationsgerät einen Rotationszerstäuber 10 trägt, wobei der Rotationszerstäuber 10 einen drehbaren Glockenteller 11 aufweist, was aus dem Stand der Technik hinlänglich bekannt ist und deshalb nicht näher beschrieben werden muss.

Im Lackierbetrieb des Lackierroboters 1 besteht das Problem, dass der Lackierroboter 1 durch überschüssigen Beschichtungsmittelnebel ("Overspray") verunreinigt wird, was gelegentlich eine aufwändige Reinigung erforderlich macht.

Zur Vermeidung einer derartigen Verunreinigung ist der Lackierroboter 1 mit einem Roboterschutzanzug ummantelt, der aus drei Teilen 12, 13, 14 besteht.

Das Teil 12 der Roboterschutzhülle ummantelt im montierten Zustand die Roboterbasis 2.

Das Teil 13 der Roboterschutzhülle ummantelt im montierten Zustand das drehbare Roboterglied 3 und den proximalen Roboterarm 5.

Das Teil 14 der Roboterschutzhülle ummantelt dagegen im montierten Zustand den distalen Roboterarm 7.

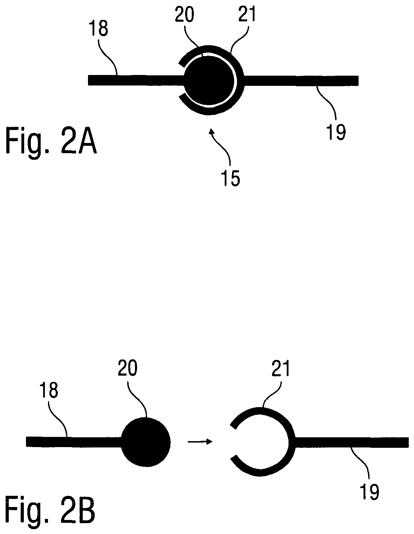

Die Erfindung zeichnet sich nun in diesem Ausführungsbeispiel dadurch aus, dass die Befestigung der Teile 12-14 der Roboterschutzhülle an dem Lackierroboter 1 durch Kederverbindungen 15 erfolgt, wie sie in den Figuren 2A und 2B schematisch dargestellt sind.

Zwei Kederverbindungen 15 befinden sich hierbei an einem Übergang 16 von der Roboterbasis 2 zu dem drehbaren Roboterglied 3. Das Teil 12 der Roboterschutzhülle ist entlang diesem Übergang 16 durch eine ringförmige Kederverbindung mit der Roboterbasis 2 verbunden. Das Teil 13 der Roboterschutzhülle ist an dem Übergang 16 zwischen der Roboterbasis 2 und dem drehbaren Roboterglied 3 durch eine Kederverbindung mit dem drehbaren Roboterglied 3 verbunden.

Die beiden Kederverbindungen an dem Übergang 16 verlaufen hier jeweils parallel zueinander und schließen die Roboterbasis 2 bzw. das drehbare Roboterglied 3 ringförmig ein.

Weitere Kederverbindungen befinden sich an einem Übergang 17 von dem proximalen Roboterarm 5 zu dem distalen Roboterarm 7. An dem Übergang 17 ist das Teil 14 der Roboterschutzhülle durch eine ringförmig umlaufende Kederverbindung mit dem proximalen Roboterarm 5 verbunden. Das angrenzende Teil 13 der Roboterschutzhülle ist an dem Übergang 17 ebenfalls durch eine ringförmig umlaufende Kederverbindung mit dem proximalen Roboterarm 5 verbunden.

Aus den Figuren 2A und 2B ist das erfindungsgemäße Prinzip der Kederverbindungen 15 ersichtlich. So ermöglichen die Kederverbindungen 15 eine Verbindung von zwei Bauteilen 18, 19 (z. B. zwei Teile der Roboterschutzhülle oder Roboterschutzhülle einerseits und Lackierroboter andererseits). An dem einen Bauteil 18 ist hierbei ein Keder 20 angeformt, der sich rechtwinklig zur Zeichenebene erstreckt. An dem anderen Bauteil 19 ist dagegen eine entsprechend angepasste Kederschiene 21 angeformt, die sich ebenfalls rechtwinklig zur Zeichenebene erstreckt.

Zur Herstellung einer formschlüssigen Verbindung werden die beiden Bauteile 18, 19 - abweichend von herkömmlichen Kederverbindungen - in Richtung des Pfeils aufeinander zu bewegt, bis der Keder 20 in der Kederschiene 21 einrastet. Zum Lösen der Kederverbindung 15 werden die beiden Bauteile 18, 19 daher entgegen der Pfeilrichtung auseinandergezogen.

Alternativ kann die Herstellung der Kederverbindung 15 wie bei herkömmlichen Kederverbindungen erfolgen, indem der Keder 20 in Längsrichtung (d. h. rechtwinklig zur Zeichenebene) in die Kederschiene 21 hinein geschoben wird. Zum Lösen der Kederverbindung 15 wird der Keder 20 dann wieder in Längsrichtung aus der Kederschiene 21 heraus gezogen.

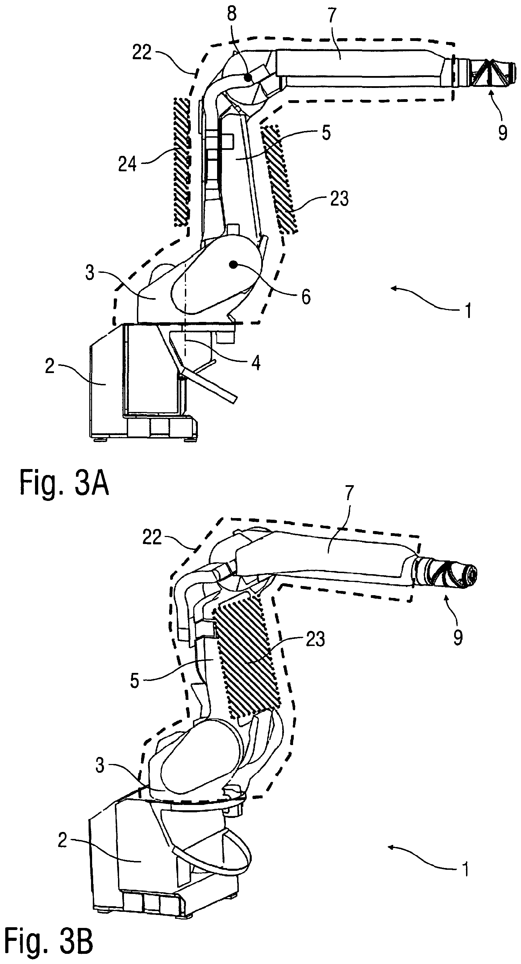

Die Figuren 3A und 3B zeigen eine Abwandlung von Figur 1, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Lackierroboter 1 von einer Roboterschutzhülle 22 eingehüllt wird, die im Bereich von Wartungsklappen an dem Lackierroboter 1 Öffnungen 23, 24 aufweist, die in der Zeichnung nur schematisch als schraffierte Flächen dargestellt sind.

Die Öffnungen 23, 24 werden im Lackierbetrieb durch ein Verbindungselement (z.B. Kederverbindung, Klettverschluss, Druckknöpfe, Reißverschluss) verschlossen.

Zu Wartungszwecken werden die Öffnungen 23, 24 in der Roboterschutzhülle 22 dagegen geöffnet und ermöglichen dann das Öffnen der darunter befindlichen Wartungsklappe an dem Lackierroboter 1, damit Wartungsarbeiten in dem Lackierroboter 1 durchgeführt werden können.

Die Erfindung beansprucht nicht nur Schutz für das vorstehend beschriebene bevorzugte Ausführungsbeispiel. Vielmehr beansprucht die Erfindung auch Schutz für Varianten und Abwandlungen, die ebenfalls von dem Erfindungsgedanken Gebrauch machen und deshalb in den Schutzbereich fallen.

### Bezugszeichenliste:

- 1: Lackierroboter
- 2: Roboterbasis
- 3: Drehbares Roboterglied
- 4: Drehachse
- 5: Proximaler Roboterarm
- 6: Schwenkachse
- 7: Distaler Roboterarm
- 8: Schwenkachse
- 9: Roboterhandachse
- 10: Rotationszerstäuber
- 11: Glockenteller
- 12: Teil der Roboterschutzhülle
- 13: Teil der Roboterschutzhülle
- 14: Teil der Roboterschutzhülle
- 15: Kederverbindung
- 16: Übergang von der Roboterbasis zu dem drehbaren Roboterglied
- 17: Übergang von dem proximalen Roboterarm zu dem distalen Roboterarm
- 18: Bauteil
- 19: Bauteil
- 20: Keder
- 21: Kederschiene
- 22: Roboterschutzhülle
- 23: Öffnung in der Roboterschutzhülle
- 24: Öffnung in der Roboterschutzhülle

## Patentansprüche

1. Roboterschutzhülle (12-14, 22) für einen Beschichtungsroboter (1), insbesondere einen Lackierroboter (1), mit einem
a) Verbindungselement (15, 20, 21) zur formschlüssigen Befestigung der Roboterschutzhülle (12-14, 22), insbesondere
a1) zur Befestigung der Roboterschutzhülle (12-14, 22) an dem Beschichtungsroboter (1) oder
a2) zur Verbindung von zwei benachbarten Teilen der Roboterschutzhülle (12-14, 22) miteinander,
**dadurch gekennzeichnet,**
b) **dass** das Verbindungselement (15, 20, 21) Bestandteil einer Kederverbindung (15) ist.

2. Roboterschutzhülle (12-14) nach Anspruch 1,
**dadurch gekennzeichnet,**
a) **dass** die Roboterschutzhülle (12-14, 22) mindestens zwei Teile (12-14, 22) aufweist, die im montierten Zustand aneinander angrenzen, und
b) **dass** die beiden benachbarten Teile (12, 14, 22) der Roboterschutzhülle (12-14, 22) am Übergang (16, 17) durch jeweils eine Kederverbindung (15) mit dem Beschichtungsroboter (1) verbunden werden können.

3. Roboterschutzhülle (12-14) nach Anspruch 2, **dadurch gekennzeichnet, dass** die Kederverbindungen (15) der beiden benachbarten Teile der Roboterschutzhülle (12-14, 22) langgestreckt sind und parallel zueinander verlaufen.

4. Roboterschutzhülle (12-14, 22) nach einem der vorhergehenden Ansprüche, **dadurch gekennzeichnet,**
a) **dass** die Kederverbindung (15) einen Keder (20) an der Roboterschutzhülle (12-14, 22) und eine Kederschiene (21) an dem Beschichtungsroboter (1) aufweist, oder
b) **dass** die Kederverbindung (15) eine Kederschiene (21) an der Roboterschutzhülle (12-14, 22) und einen Keder (20) an dem Beschichtungsroboter (1) aufweist.

5. Roboterschutzhülle (12-14) nach Anspruch 1,
**dadurch gekennzeichnet,**
a) **dass** die Roboterschutzhülle (12-14, 22) mindestens zwei Teile (12-14) aufweist, die im montierten Zustand an dem Beschichtungsroboter (1) aneinander angrenzen, und
b) **dass** die beiden benachbarten Teile (12-14, 22) der Roboterschutzhülle (12-14) am Übergang (16, 17) durch die Kederverbindung (15) miteinander verbunden werden können.

6. Roboterschutzhülle (12-14) nach einem der vorhergehenden Ansprüche, **dadurch gekennzeichnet,**
a) **dass** ein erstes Teil (12) der Roboterschutzhülle (12-14) an die Form einer Roboterbasis (2) des Beschichtungsroboters (1) angepasst ist,
b) **dass** ein zweites Teil (13) der Roboterschutzhülle (12-14) an die Form eines drehbaren Roboterglieds (3) und/oder eines proximalen Roboterarms (5) des Beschichtungsroboters (1) angepasst ist, und/oder
c) **dass** ein drittes Teil (14) der Roboterschutzhülle (12-14) an die Form eines distalen Roboterarms (7) des Beschichtungsroboters (1) angepasst ist.

7. Roboterschutzhülle (12-14) nach einem der vorhergehenden Ansprüche, **dadurch gekennzeichnet,**
a) **dass** die Roboterschutzhülle (12-14, 22) lackundurchlässig ist, und/oder
b) **dass** die Roboterschutzhülle (12-14, 22) aus einem flexiblen Material besteht und eine flexible Form hat, und/oder
c) **dass** die Roboterschutzhülle (12-14, 22) aus einem elektrisch isolierenden Material besteht, und/oder
d) **dass** die Kederverbindung (15) manuell und ohne Werkzeug lösbar und verrastbar ist, und/oder
e) **dass** die Roboterschutzhülle (12-14, 22) mehrere Teile (12-14) aufweist, die jeweils paarweise durch die Kederverbindung (15) miteinander verbunden werden können.

8. Roboterschutzhülle (22) nach einem der vorhergehenden Ansprüche, **gekennzeichnet durch** eine verschließbare Öffnung (23, 24) in der Roboterschutzhülle (22), wobei die Öffnung (23, 24) einen Zugriff auf einen darunter befindlichen Wartungsbereich an dem Beschichtungsroboter (1) ermöglicht.

9. Roboterschutzhülle (22) nach Anspruch 8, **dadurch gekennzeichnet, dass** die Öffnung (23, 24) in der Roboterschutzhülle (22) durch eines der folgenden Verbindungsmittel verschließbar ist:
a) Reißverschluss,
b) Kederverbindung,
c) Druckknopf,
d) Klettverschluss.

10. Beschichtungsroboter (1), insbesondere Lackierroboter (1), mit
a) einer Roboterschutzhülle (12-14, 22), die den Beschichtungsroboter (1) teilweise ummantelt, und
b) einem Verbindungselement (15, 20, 21) zur formschlüssigen Befestigung der Roboterschutzhülle (12-14, 22), insbesondere
b1) zur Befestigung der Roboterschutzhülle (12-14, 22) an dem Beschichtungsroboter (1) oder
b2) zur Verbindung von zwei benachbarten Teilen (12-14) der Roboterschutzhülle (12-14) miteinander,
**dadurch gekennzeichnet,**
c) **dass** das Verbindungselement (15, 20, 21) Bestandteil einer Kederverbindung (15) ist.

11. Beschichtungsroboter (1) nach Anspruch 10,
**gekennzeichnet durch**
a) eine Roboterbasis (2),
b) ein drehbares Roboterglied (3), das relativ zu der Roboterbasis (2) drehbar ist, insbesondere um eine senkrechte Drehachse (4),
c) einen proximalen Roboterarm (5), der relativ zu dem drehbaren Roboterglied (3) schwenkbar ist, insbesondere um eine waagerechte Schwenkachse (6),
d) einen distalen Roboterarm (7), der relativ zu dem proximalen Roboterarm (5) schwenkbar ist, insbesondere um eine waagerechte Schwenkachse (8),
e) eine Roboterhandachse (9), die an dem distalen Roboterarm (7) angebracht ist, und
f) ein Applikationsgerät (10), das an der Roboterhandachse (9) angebracht ist.

12. Beschichtungsroboter (1) nach Anspruch 11,
**dadurch gegenkennzeichnet,**
a) dass ein erstes Teil (12) der Roboterschutzhülle (12-14) die Roboterbasis (2) ummantelt,
b) dass ein zweites Teil (13) der Roboterschutzhülle (12-14) das drehbare Roboterglied (3) und/oder den proximalen Roboterarm (5) ummantelt,
c) dass das erste Teil (12) der Roboterschutzhülle (12-14) am Übergang (16) von der Roboterbasis (2) zu dem drehbaren Roboterglied (3) durch eine erste Kederverbindung (15) mit der Roboterbasis (2) verbunden ist, und
d) dass das zweite Teil (13) der Roboterschutzhülle (12-14) am Übergang von der Roboterbasis (2) zu dem drehbaren Roboterglied (3) durch eine zweite Kederverbindung (15) mit dem drehbaren Roboterglied (3) verbunden ist.

13. Beschichtungsroboter (1) nach Anspruch 12,
**dadurch gegenkennzeichnet,**
a) dass ein drittes Teil (14) der Roboterschutzhülle (12-14) den distalen Roboterarm (7) ummantelt,
b) dass das zweite Teil (13) der Roboterschutzhülle (12-14) am Übergang (17) von dem proximalen Roboterarm (5) zu dem distalen Roboterarm (7) durch eine dritte Kederverbindung (15) mit dem proximalen Roboterarm (5) verbunden ist, und dass das dritte Teil (14) der Roboterschutzhülle (12-14) am Übergang (17) von dem distalen Roboterarm (7) zu dem proximalen Roboterarm (5) durch eine vierte Kederverbindung (15) mit dem distalen Roboterarm (7) oder dem proximalen Roboterarm (5)verbunden ist, oder
c) dass das zweite Teil (13) der Roboterschutzhülle (12-14) durch eine Kederverbindung (15) mit dem dritten Teil (14) der Roboterschutzhülle (12-14) verbunden ist und zwar am Übergang (17) von dem distalen Roboterarm (7) zu dem proximalen Roboterarm (5).

14. Beschichtungsroboter (1) nach einem der Ansprüche 10 bis 13, **dadurch gegenkennzeichnet,**
a) dass die Kederverbindung (15) langgestreckt ist und einen Ring bildet, und/oder
b) dass der von der ringförmigen Kederverbindung (15) gebildete Ring im Wesentlichen geschlossen ist, und/oder
c) dass die Kederverbindung (15) ein Bauteil des Beschichtungsroboters (1) ringförmig einschließt, insbesondere die Roboterbasis (2), das drehbare Roboterglied (3), den proximalen Roboterarm (5) oder den distalen Roboterarm (7).

15. Beschichtungsroboter (1), insbesondere nach einem der Ansprüche 10 bis 14, **gekennzeichnet durch**
a) einen Wartungsbereich an dem Beschichtungsroboter (1), insbesondere mit einem verschließbaren Wartungsdeckel, und
b) eine Roboterschutzhülle (22) nach Anspruch 8 oder 9, wobei die verschließbare Öffnung (23, 24) über dem Wartungsbereich des Beschichtungsroboters (1) liegt.

16. Verwendung einer Kederverbindung (15) zur formschlüssigen Verbindung einer Roboterschutzhülle (12-14, 22) mit einem anderen Bauteil, insbesondere mit dem Beschichtungsroboter (1) oder mit einer benachbarten Roboterschutzhülle (12-14).

## Claims

1. A robot protecting jacket (12-14, 22) for a coating robot (1), in particular a painting robot (1), with a
a) connecting element (15, 20, 21) for form-fittingly fastening the robot protecting jacket (12-14, 22), in particular
a1) for fastening the robot protecting jacket (12-14, 22) to the coating robot (1), or
a2) for connecting two adjacent portions of the robot protecting jacket (12-14, 22) to each other,
**characterised in that**
b) the connecting element (15, 20, 21) is part of a beaded connection (15).

2. A robot protecting jacket (12-14) according to Claim 1, **characterised in that**
a) the robot protecting jacket (12-14, 22) has at least two portions (12-14, 22) which adjoin each other in the mounted state, and
b) the two adjacent portions (12, 14, 22) of the robot protecting jacket (12-14, 22) can be connected to the coating robot (1) at the transition (16, 17) by one beaded connection (15) in each case.

3. A robot protecting jacket (12-14) according to Claim 2, **characterised in that** the beaded connections (15) of the two adjacent portions of the robot protecting jacket (12-14, 22) are elongate and run parallel to each other.

4. A robot protecting jacket (12-14, 22) according to one of the preceding claims, **characterised in that**
a) the beaded connection (15) has a bead (20) on the robot protecting jacket (12-14, 22) and a bead rail (21) on the coating robot (1), or
b) the beaded connection (15) has a bead rail (21) on the robot protecting jacket (12-14, 22) and a bead (20) on the coating robot (1).

5. A robot protecting jacket (12-14) according to Claim 1, **characterised in that**
a) the robot protecting jacket (12-14, 22) has at least two portions (12-14) which adjoin each other in the mounted state on the coating robot (1), and
b) the two adjacent portions (12-14, 22) of the robot protecting jacket (12-14) can be connected to each other at the transition (16, 17) by the beaded connection (15).

6. A robot protecting jacket (12-14) according to one of the preceding claims, **characterised in that**
a) a first portion (12) of the robot protecting jacket (12-14) is adapted to the form of a robot base (2) of the coating robot (1),
b) a second portion (13) of the robot protecting jacket (12-14) is adapted to the form of a rotatable robot member (3) and/or a proximal robot arm (5) of the coating robot (1), and/or
c) a third portion (14) of the robot protecting jacket (12-14) is adapted to the form of a distal robot arm (7) of the coating robot (1).

7. A robot protecting jacket (12-14) according to one of the preceding claims, **characterised in that**
a) the robot protecting jacket (12-14, 22) is impermeable to paint, and/or
b) the robot protecting jacket (12-14, 22) consists of a flexible material and has a flexible form, and/or
c) the robot protecting jacket (12-14, 22) consists of an electrically insulating material, and/or
d) the beaded connection (15) can be disengaged and latched manually and without a tool, and/or
e) the robot protecting jacket (12-14, 22) has a plurality of portions (12-14) which can be connected to each other in each case in pairs by the beaded connection (15) .

8. A robot protecting jacket (22) according to one of the preceding claims, **characterised by** a closable opening (23, 24) in the robot protecting jacket (22), the opening (23, 24) permitting access to a maintenance area thereunder on the coating robot (1).

9. A robot protecting jacket (22) according to Claim 8, **characterised in that** the opening (23, 24) in the robot protecting jacket (22) can be closed by one of the following connection means:
a) zip fastener,
b) beaded connection,
c) press stud,
d) hook-and-loop fastener.

10. A coating robot (1), in particular painting robot (1), comprising
a) a robot protecting jacket (12-14, 22) which partially encases the coating robot (1), and
b) a connecting element (15, 20, 21) for form-fittingly fastening the robot protecting jacket (12-14, 22), in particular
b1) for fastening the robot protecting jacket (12-14, 22) to the coating robot (1), or
b2) for connecting two adjacent portions (12-14) of the robot protecting jacket (12-14) to each other,
**characterised in that**
c) the connecting element (15, 20, 21) is part of a beaded connection (15).

11. A coating robot (1) according to Claim 10,
**characterised by**
a) a robot base (2),
b) a rotatable robot member (3) which is rotatable relative to the robot base (2), in particular about a vertical axis of rotation (4),
c) a proximal robot arm (5) which is pivotable relative to the rotatable robot member (3), in particular about a horizontal pivot axis (6),
d) a distal robot arm (7) which is pivotable relative to the proximal robot arm (5), in particular about a horizontal pivot axis (8),
e) a robot hand axis (9) which is attached to the distal robot arm (7), and
f) an application device (10) which is attached to the robot hand axis (9).

12. A coating robot (1) according to Claim 11,
**characterised in that**
a) a first portion (12) of the robot protecting jacket (12-14) encases the robot base (2),
b) a second portion (13) of the robot protecting jacket (12-14) encases the rotatable robot member (3) and/or the proximal robot arm (5),
c) the first portion (12) of the robot protecting jacket (12-14) at the transition (16) from the robot base (2) to the rotatable robot member (3) is connected to the robot base (2) by a first beaded connection (15), and
d) the second portion (13) of the robot protecting jacket (12-14) at the transition from the robot base (2) to the rotatable robot member (3) is connected to the rotatable robot member (3) by a second beaded connection (15).

13. A coating robot (1) according to Claim 12,
**characterised in that**
a) a third portion (14) of the robot protecting jacket (12-14) encases the distal robot arm (7),
b) the second portion (13) of the robot protecting jacket (12-14) at the transition (17) from the proximal robot arm (5) to the distal robot arm (7) is connected to the proximal robot arm (5) by a third beaded connection (15), and that the third portion (14) of the robot protecting jacket (12-14) at the transition (17) from the distal robot arm (7) to the proximal robot arm (5) is connected to the distal robot arm (7) or the proximal robot arm (5) by a fourth beaded connection (15), or
c) the second portion (13) of the robot protecting jacket (12-14) is connected to the third portion (14) of the robot protecting jacket (12-14) by a beaded connection (15), namely at the transition (17) from the distal robot arm (7) to the proximal robot arm (5).

14. A coating robot (1) according to one of Claims 10 to 13, **characterised in that**
a) the beaded connection (15) is elongate and forms a ring, and/or
b) the ring formed by the ring-shaped beaded connection (15) is substantially closed, and/or
c) the beaded connection (15) encloses a component of the coating robot (1), in particular the robot base (2), the rotatable robot member (3), the proximal robot arm (5) or the distal robot arm (7), in ring-like manner.

15. A coating robot (1), in particular according to one of Claims 10 to 14, **characterised by**
a) a maintenance area on the coating robot (1), in particular with a closable maintenance cover, and
b) a robot protecting jacket (22) according to Claim 8 or 9, the closable opening (23, 24) lying over the maintenance area of the coating robot (1).

16. Use of a beaded connection (15) for form-fittingly connecting a robot protecting jacket (12-14, 22) to another component, in particular to the coating robot (1) or to an adjacent robot protecting jacket (12-14).

## Revendications

1. Housse protectrice de robot (12-14, 22) pour un robot d'application de revêtement (1), en particulier un robot de mise en peinture (1), avec un
a) élément de liaison (15, 20, 21) destiné à fixer, par complémentarité de forme, la housse protectrice de robot (12-14, 22), en particulier
a1) destiné à fixer la housse protectrice de robot (12-14, 22) sur le robot d'application de revêtement (1) ou
a2) à relier l'une à l'autre deux parties voisines de la housse protectrice de robot (12-14, 22),
**caractérisée en ce que**
b) l'élément de liaison (15, 20, 21) fait partie intégrante d'une liaison à jonc (15).

2. Housse protectrice de robot (12-14) selon la revendication 1,
**caractérisée en ce que**
a) la housse protectrice de robot (12-14, 22) comporte au moins deux parties (12-14, 22) qui sont contiguës entre elles à l'état monté, et
b) les deux parties (12, 14, 22) voisines de la housse protectrice de robot (12-14, 22) peuvent être reliées par respectivement une liaison à jonc (15) au robot d'application de revêtement (1) au niveau de la transition (16, 17).

3. Housse protectrice de robot (12-14) selon la revendication 2, **caractérisée en ce que** les liaisons à jonc (15) des deux parties voisines de la housse protectrice de robot (12-14, 22) sont allongées et sont parallèles entre elles.

4. Housse protectrice de robot (12-14, 22) selon l'une des revendications précédentes, **caractérisée en ce que**
a) la liaison à jonc (15) comporte un jonc (20) sur la housse protectrice de robot (12-14, 22) et un rail de jonc (21) sur le robot d'application de revêtement (1), ou
b) la liaison à jonc (15) comporte un rail de jonc (21) sur la housse protectrice de robot (12-14, 22) et un jonc (20) sur le robot d'application de revêtement (1).

5. Housse protectrice de robot (12-14) selon la revendication 1,
**caractérisée en ce que**
a) la housse protectrice de robot (12-14, 22) comporte au moins deux parties (12-14) qui sont contiguës l'une à l'autre dans l'état monté sur le robot d'application de revêtement (1), et
b) les deux parties (12-14, 22) voisines de la housse protectrice de robot (12-14) peuvent être raccordées l'une à l'autre au niveau de la transition (16, 17) par la liaison à jonc (15).

6. Housse protectrice de robot (12-14) selon l'une des revendications précédentes, **caractérisée en ce que**
a) une première partie (12) de la housse protectrice de robot (12-14) est adaptée à la forme d'une base de robot (2) du robot d'application de revêtement (1),
b) une deuxième partie (13) de la housse protectrice de robot (12-14) est adaptée à la forme d'un organe de robot (3) rotatif et/ou d'un bras de robot (5) proximal du robot d'application de revêtement (1), et/ou
c) une troisième partie (14) de la housse protectrice de robot (12-14) est adaptée à la forme d'un bras de robot (7) distal du robot d'application de revêtement (1).

7. Housse protectrice de robot (12-14) selon l'une des revendications précédentes, **caractérisée en ce que**
a) la housse protectrice de robot (12-14, 22) est imperméable à la peinture, et/ou
b) la housse protectrice de robot (12-14, 22) est composée d'un matériau flexible et a une forme flexible, et/ou
c) la housse protectrice de robot (12-14, 22) est composée d'un matériau électriquement isolant, et/ou
d) la liaison à jonc (15) peut être détachée et verrouillée manuellement et sans outil, et/ou
e) la housse protectrice de robot (12-14, 22) comporte plusieurs parties (12-14) qui peuvent être reliées les unes aux autres respectivement par paires par la liaison à jonc (15).

8. Housse protectrice de robot (22) selon l'une des revendications précédentes, **caractérisée par** une ouverture (23, 24), pouvant être fermée, dans la housse protectrice de robot (22), l'ouverture (23, 24) permettant d'accéder à une zone de maintenance située au-dessous sur le robot d'application de revêtement (1).

9. Housse protectrice de robot (22) selon la revendication 8,
**caractérisée en ce que** l'ouverture (23, 24) dans la housse protectrice de robot (22) peut être fermée par l'un des moyens de liaison suivants :
a) fermeture éclair,
b) liaison à jonc,
c) bouton-poussoir,
d) fermeture autoagrippante.

10. Robot d'application de revêtement (1), en particulier robot de mise en peinture (1), avec
a) une housse protectrice de robot (12-14, 22) qui enveloppe partiellement le robot d'application de revêtement (1), et
b) un élément de liaison (15, 20, 21) destiné à fixer, par complémentarité de forme, la housse protectrice de robot (12-14, 22), en particulier
b1) destiné à fixer la housse protectrice de robot (12-14, 22) sur le robot d'application de revêtement (1) ou
b2) à relier l'une à l'autre deux parties (12-14) voisines de la housse protectrice de robot (12-14),
**caractérisé en ce que**
c) l'élément de liaison (15, 20, 21) fait partie intégrante d'une liaison à jonc (15).

11. Robot d'application de revêtement (1) selon la revendication 10,
**caractérisé par**
a) une base de robot (2),
b) un organe de robot (3) rotatif qui peut tourner relativement à la base de robot (2), en particulier autour d'un axe de rotation (4) vertical,
c) un bras de robot (5) proximal qui peut pivoter relativement à l'organe de robot (3) rotatif, en particulier autour d'un axe de pivotement (6) horizontal,
d) un bras de robot (7) distal qui peut pivoter relativement au bras de robot (5) proximal, en particulier autour d'un axe de pivotement (8) horizontal,
e) un poignet de robot (9) qui est mis en place sur le bras de robot (7) distal, et
f) un appareil d'application (10) qui est mis en place sur le poignet de robot (9).

12. Robot d'application de revêtement (1) selon la revendication 11,
**caractérisé en ce que**
a) une première partie (12) de la housse protectrice de robot (12-14) enveloppe la base de robot (2),
b) une deuxième partie (13) de la housse protectrice de robot (12-14) enveloppe l'organe de robot (3) rotatif et/ou le bras de robot (5) proximal,
c) la première partie (12) de la housse protectrice de robot (12-14) est reliée par une première liaison à jonc (15) à la base de robot (2) au niveau de la transition (16) entre la base de robot (2) et l'organe de robot (3) rotatif, et
d) la deuxième partie (13) de la housse protectrice de robot (12-14) est reliée par une deuxième liaison à jonc (15) à l'organe de robot (3) rotatif au niveau de la transition entre la base de robot (2) et l'organe de robot (3) rotatif.

13. Robot d'application de revêtement (1) selon la revendication 12,
**caractérisé en ce que**
a) une troisième partie (14) de la housse protectrice de robot (12-14) enveloppe le bras de robot (7) distal,
b) la deuxième partie (13) de la housse protectrice de robot (12-14) est reliée par une troisième liaison à jonc (15) au bras de robot (5) proximal au niveau de la transition (17) entre le bras de robot (5) proximal et le bras de robot (7) distal, et **en ce que** la troisième partie (14) de la housse protectrice de robot (12-14) est reliée par une quatrième liaison à jonc (15) au bras de robot (7) distal ou au bras de robot (5) proximal au niveau de la transition (17) entre le bras de robot (7) distal et le bras de robot (5) proximal, ou
c) **en ce que** la deuxième partie (13) de la housse protectrice de robot (12-14) est reliée par une liaison à jonc (15) à la troisième partie (14) de la housse protectrice de robot (12-14), et cela au niveau de la transition (17) entre le bras de robot (7) distal et le bras de robot (5) proximal.

14. Robot d'application de revêtement (1) selon l'une des revendications 10 à 13, **caractérisé en ce que**
a) la liaison à jonc (15) est allongée et forme un anneau, et/ou
b) l'anneau formé par la liaison à jonc (15) de forme annulaire est essentiellement fermé, et/ou
c) la liaison à jonc (15) englobe de façon annulaire un composant du robot d'application de revêtement (1), en particulier la base de robot (2), l'organe de robot (3) rotatif, le bras de robot (5) proximal ou le bras de robot (7) distal.

15. Robot d'application de revêtement (1), en particulier selon l'une des revendications 10 à 14, **caractérisé par**
a) une zone de maintenance sur le robot d'application de revêtement (1), en particulier pourvue d'un couvercle de maintenance pouvant être fermé, et
b) une housse protectrice de robot (22) selon la revendication 8 ou 9, dans laquelle l'ouverture (23, 24) pouvant être fermée est placée au-dessus de la zone de maintenance du robot d'application de revêtement (1).

16. Utilisation d'une liaison à jonc (15) pour relier par complémentarité de forme une housse protectrice de robot (12-14, 22) à un autre composant, en particulier au robot d'application de revêtement (1) ou à une housse protectrice de robot (12-14) voisine.
